(19) Europäisches Patentamt / European Patent Office / Office européen des brevets

(11) **EP 1 708 403 B1**

(12) **EUROPÄISCHE PATENTSCHRIFT**

(45) Veröffentlichungstag und Bekanntmachung des Hinweises auf die Patenterteilung:
**05.11.2008 Patentblatt 2008/45**

(51) Int Cl.:
**H04L 1/18** *(2006.01)*

(21) Anmeldenummer: **05006857.6**

(22) Anmeldetag: **30.03.2005**

(54) **Hybrides ARQ Verfahren zur Datenübertragung, Sender und Empfänger dafür**

Hybrid ARQ method for data transmission, transmitter and receiver therefor

Procédé ARQ hybride de transmission de données, émetteur et récepteur correspondants

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**04.10.2006 Patentblatt 2006/40**

(73) Patentinhaber: **SIEMENS AKTIENGESELLSCHAFT**
**80333 München (DE)**

(72) Erfinder: **Raaf, Bernhard**
**82061 Neuried (DE)**

(56) Entgegenhaltungen:
**US-A1- 2003 097 629**

- **"Universal Mobile Telecommunications System (UMTS); Multiplexing and channel coding (FDD) (3GPP TS 25.212 version 6.3.0 Release 6); ETSI TS 125 212" ETSI STANDARDS, EUROPEAN TELECOMMUNICATIONS STANDARDS INSTITUTE, SOPHIA-ANTIPO, FR, Bd. 3-R1, Nr. V630, Dezember 2004 (2004-12), XP014027617 ISSN: 0000-0001**
- **GHOSH A ET AL: "Incremental redundancy (IR) schemes for W-CDMA HS-DSCH" PERSONAL, INDOOR AND MOBILE RADIO COMMUNICATIONS, 2002. THE 13TH IEEE INTERNATIONAL SYMPOSIUM ON SEPT. 15-18, 2002, PISCATAWAY, NJ, USA,IEEE, Bd. 3, 15. September 2002 (2002-09-15), Seiten 1078-1082, XP010611428 ISBN: 0-7803-7589-0**

EP 1 708 403 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Datenübertragung sowie einen entsprechend ausgestalteten Sender und Empfänger. Die Datenübertragung erfolgt insbesondere gemäß einem ARQ-Verfahren oder einem Hybrid-ARQ-Verfahren, in einem Kommunikationssystem, insbesondere einem Mobilfunksystem.

Insbesondere in Verbindung mit Mobilfunksystemen wird häufig die Verwendung so genannter Paketzugriffsverfahren bzw. paket-orientierter Datenverbindungen vorgeschlagen, da die aufkommenden Nachrichtentypen häufig einen sehr hohen Burstfaktor besitzen, so dass nur kurze Aktivitätsperioden existieren, die von langen Ruhepausen unterbrochen sind. Paketorientierte Datenverbindungen können in diesem Fall die Effizienz im Vergleich zu anderen Datenübertragungsverfahren, bei denen ein kontinuierlicher Datenstrom vorhanden ist, erheblich steigern, da bei Datenübertragungsverfahren mit einem kontinuierlichen Datenstrom eine einmal zugeteilte Ressource, wie z.B. eine Trägerfrequenz oder ein Zeitschlitz, während der gesamten Kommunikationsbeziehung zugeteilt bleibt, d.h. eine Ressource bleibt auch dann belegt, wenn momentan keine Datenübertragungen anliegen, so dass diese Ressource für andere Netzteilnehmer nicht zur Verfügung steht. Dies führt zu einer nicht optimalen Nutzung des knappen Frequenzspektrums für Mobilfunksysteme.

Zukünftige Mobilfunksysteme, wie beispielsweise gemäß dem UMTS-Mobilfunkstandard ("Universal Mobile Telecommunications System"), werden eine Vielzahl unterschiedlicher Dienste anbieten, wobei neben der reinen Sprachübertragung Multimedia-Anwendungen zunehmend an Bedeutung gewinnen werden. Die damit einhergehende Dienstevielfalt mit unterschiedlichen Übertragungsraten erfordert ein sehr flexibles Zugriffsprotokoll auf der Luftschnittstelle zukünftiger Mobilfunksysteme. Paketorientierte Datenübertragungsverfahren haben sich hier als sehr geeignet erwiesen.

Im Zusammenhang mit UMTS-Mobilfunksystemen wurde bei paketorientierten Datenverbindungen ein sogenanntes ARQ-Verfahren ("Automatic Repeat Request") vorgeschlagen. Dabei werden die von einem Sender an einen Empfänger übertragenen Datenpakete empfängerseitig nach ihrer Decodierung hinsichtlich ihrer Qualität überprüft. Ist ein empfangenes Datenpaket fehlerhaft, fordert der Empfänger eine erneute Übertragung dieses Datenpakets von dem Sender an, d.h. es wird ein wiederholungsdatenpaket von dem Sender an den Empfänger gesendet, welches mit dem zuvor gesendeten und fehlerhaft empfangenen Datenpaket identisch bzw. teilweise identisch ist (je nachdem, ob das Wiederholungsdatenpaket weniger oder gleich viele Daten wie das ursprüngliche Datenpaket enthält, wird von einer vollen oder einer partiellen Wiederholung gesprochen). Hinsichtlich dieses für den UMTS-Mobilfunkstandard vorgeschlagenen ARQ-Verfahrens, welches auch als Hybrid-ARQ-Typ I-Verfahren bezeichnet wird ist sowohl die Übertragung von Daten als auch von so genannten Headerinformationen in einem Datenpaket vorgesehen, wobei die Headerinformationen auch Informationen zur Fehlerüberprüfung, wie beispielsweise CRC-Bits ("Cyclic Redundancy Check") aufweisen und auch zur Fehlerkorrektur codiert sein können (so genannte "Forward Error Correction", FEC).

In UMTS- Systemen werden insbesondere zur Realisierung des **HSDPA** (High Speed Downlink Packet Access) und zur Realisierung des so genannten EDCH (Enhanced Uplink) HARQ-Verfahren eingesetzt. Zur Codierung der zu übertragenden Daten werden insbesondere Turbo-Codes verwendet, wobei die zu übertragenden Daten bzw. Bit in systematische Bit und Paritätsbit umgesetzt werden.

Wird dabei die Übertragung eines ersten Datenpaketes empfangsseitig nicht korrekt dekodiert (feststellbar anhand der Checksumme), so wird eine Wiederholungsübertragung angefordert. Nach Empfang des entsprechenden Wiederholungsdatenpaketes wird dann eine erneute Dekodierung unter der Verwendung beider Datenpakete durchgeführt.

Falls über die Luftschnittstelle weniger Bit übertragen werden können, als bei der Kodierung erzeugt werden, muss eine geeignete Teilmenge für die Erstübertragung (erstes Datenpaket) und auch für die Wiederholung(en) (Wiederholungsdatenpaket (e)) ausgewählt werden. Diese Auswahl wird durch einen so genannten Ratenanpassungsalgorithmus, insbesondere einen Punktierungsalgorithmus, realisiert, wobei aus der Gesamtmenge der Bit geeignete Bit entfernt (punktiert) werden, welche dann nicht übertragen werden.

Es wurde bereits für den UMTS Release 99 ein Punktierungsalgorithmus spezifiziert. Dieser Algorithmus entfernt aus einem Block von Bit eine vorgegebene Anzahl von Bit und wählt diese Bit möglichst gleichmäßig, d.h. mit möglichst gleichmäßigem Abstand aus. Beim Einsatz von Turbo-Codes wurde ferner festgelegt, dass die sog, Systematischen Bit nicht punktiert werden und erste Paritätsbit (parity 1 (bit)) und zweite Paitätsbit (parity 2 (bit)) jeweils separat punktiert werden, dabei werden beide Paritätsbit-Ströme vorzugsweise gleich stark punktiert.

Ein wichtiges Problem, das durch den eingesetzten Ratenanpassungsalgorithmus zu lösen ist, besteht darin, eine geeignete Auswahl von Bit für die Punktierung für die Erstübertragung und für die Wiederholungsübertragung(en) zu treffen

Das Problem stellt sich insbesondere dann, wenn eine relativ hohe Anzahl von Bit punktiert werden muss, insbesondere wenn mindestens 1/3 der Bit punktiert werden muss. Dies zeigte sich bereits bei der Einführung von HSDPA. Dabei wurde Folgendes festgelegt:

- Es gibt Übertragungen, die systematische Bit bevorzugen. Dabei werden die Systematischen Bits nicht punktiert, die ersten und zweiten Paritätsbit werden beide gleich stark punktiert. Eine solche Übertragung wird bevorzugt für die Erstübertragung verwendet.

- Es gibt Übertragungen, die Paritätsbit bevorzugen. Dabei werden die Paritätsbit nicht punktiert, statt dessen die systematischen Bit. Eine solche Übertragung wird bevorzugt für eine Wiederholungsübertragung verwendet. Dadurch soll erreicht werden, dass bei der Wiederholungsübertragung die Paritätsbit, welche ja bei der Erstübertragung teils punktiert wurden, nun möglichst vollständig übertragen werden. Stehen für die Wiederholungeübertragung, also im Wiederholungsdatenpaket, nicht so viele Bitstellen zur Verfügung, dass alle Paritätsbit übertragen werden können, so werden im Widerholungsdatenpaket überhaupt keine systematischen Bit übertragen und die ersten und zweiten Paritätsbit werden beide gleich stark punktiert.

Die einzelnen zu übertragenden Bit bzw. die zu punktierenden Bit werden dabei durch einen definierten Ratenanpassungsalgorithmus (Ratematchingalgorithmus) ausgewählt.

Hier ein Zitat des Ratematchingalgorithmus aus 3GPP TS 25.212 V6.3.0 (2004-12), Kapitel 4.2.7.5 Rate matching pattern determination (Nur der für Punktierung relevante Anteil ist gezeigt).

Bezeichne die Bit vor der Ratenanpassung mit:

$x_{i1}, x_{i2}, x_{i3}, ..., x_{IX1}$, wobei I die TrCH (Verkehrskanal) Nummer ist und die Folge in 4.2.7.3 für den Uplink und in 4.2.7.4 für den downlink definiert ist. Die Parameter $X_i$, $e_{ini}$, $e_{plue}$, und $e_{minus}$ sind in 4.2.7.1 für den Uplink und in 4.2.7.2 für den downlink angegeben.

Das Ratenanpassungsverfahren erfolgt gemäß folgender Vorschrift:

```
[wenn Punktierung durchzuführen ist]

  e = e_ini

  m = 1

  do while m <= X_i

    e = e - e_minus

    if e <= 0 then

      set bit x_i.m to δ where δ ∉ {0, 1}

      e = e + e_plus

    end if

    m = m + 1

  end do

[...]
```

Ende des Zitats

Die Parameter $e_{plue}$, $e_{minus}$ und $X_i$ werden für die ersten und zweiten Paritätsbit etwas unterschiedlich gesetzt, um auch hier unterschiedliche Punktierungsmuster zu erreichen. Auch für unterschiedliche Übertragungen kann das Punktierungsmuster variiert werden, indem der Parameter eini variiert wird, um zu vermeiden, dass identische Übertragungen durchgeführt werden. Eine Variation von eini verschiebt dabei das Punktierungsmuster; dies wird durch den Parameter r gesteuert.

Die Definition dieser Parameter für den Fall des EDCH (E-DCH) ist in der Spezifikation in den im Folgenden zitierten Kapiteln aus 3GPP TS 25.212 V6.3.0 (2004-12), enthalten:

"4.9.2.2 Information field mapping of retransmission sequence number"

"4.8.4.3 HARQ Rate Matching Stage"

"4.5.4.3 HARQ Second Rate Matching Stage"

Im Folgenden wird diese Ratenanpassung noch einmal kurz erläutert, wobei sich die Darstellung auf einen Bereich beschränkt, in dem 1/3 bis 1/2 der Bits punktiert werden. In diesem Bereich findet nämlich auch die Erfindung eine besonders vorteilhafte Anwendung. Da die Turbokodierung eine Kodierung der Rate 1/3 darstellt, entspricht das einer effektiven Kodierrate nach der Punktierung von 1/2 bis 2/3:

In 4.9.2.2 wird festgelegt, dass für die Erstübertragung der E-DCH RV (Redundanzversion) Index "0" verwendet wird, und für die erste wiederholungsübertragung der E-DCH RV Index "3" verwendet wird.

In 4.8.4.3 wird festgelegt, dass beim E-DCH RV Index "0" der Erstübertragung die Parameter s=1 und r=0 verwendet werden. s=1 bedeutet, dass die systematischen bits bevorzugt werden. Des weiteren wird festgelegt, dass beim E-DCH Rv Index "3" der Wiederholungsübertragung die Parameter s=0 und r=1 verwendet werden. s=0 bedeutet, dass die parity bits bevorzugt werden.
Im Kapitel 4.5.4.3 wird festgelegt, wie dann daraus die Parameter $e_{plus}$, $e_{minus}$ und $X_i$ für die systematischen Bit, die parity 1 Bit (erste Paritätsbit) und die parity 2 bit (zweite Paritätsbit)für den Ratematchingalgorithmus berechnet werden.
Der Ratematchingalgorithmus selbst ist dann in Kapitel 4.2.7.5 beschrieben (siehe oben).
Dieser Algorithmus ist in pseudo-code dargestellt. Ein bit wird dabei punktiert, indem ihm der Wert delta zugewiesen wird, da in einem folgenden Schritt alle Bit mit dem Wert delta entfernt werden. Ins Deutsche übersetzt und etwas verständlicher dargestellt, kann man den Algorithmus auch folgendermaßen darstellen:

```
e = e_ini           -- Initialisierung des Startwertes

m = 1               -- m ist Zähler f. die Bit

do while m <= X_i

   e = e - e_minus         -- Erniedrigung der Fehlervariablen

   if e <= 0 then           -- Überprüfung
     Punktierung/Verwendung des bit m

     punktiere bit x_i,m

     e = e + e_plus         -- Erhöhung der Fehlervariablen

   else

     verwende bit x_i,m

   end if

   m = m + 1               -- nächstes Bit

end do
```

Aufwändige der Erfindung zu Grunde liegende Analysen ergaben Folgendes: Das vorgestellte Verfahren gemäß dem Stand der Technik funktioniert zufrieden stellend, wenn die Kodierungsrate maximal 1/2 ist, d.h. wenn höchstens ein Drittel der Kodierten Bits punktiert wird. In diesem Fall können bei der Wiederholungsübertragung alle parity bit übertragen werden, wodurch natürlich sichergestellt ist, dass bei der nachfolgenden Dekodierung alle Bit zur Verfügung stehen: Die systematischen bit stehen vollständig aus der Erstübertragung zur Verfügung, die parity bit vollständig aus der Wiederholungsübertragung, aus der jeweils anderen Übertragung stehen teilweise Bit auch zusätzlich, redundant zur Verfügung. Dadurch, dass alle kodierten Bit zur Verfügung stehen, wird die volle Kodierungsrate des Turbo-codes erreicht, dadurch lässt sich auch eine optimale Leistungsfähigkeit des Codes erreichen.
Wenn die Kodierungsrate aber im Bereich zwischen 2/3 und 1/2 liegt, das ist der Fall, wenn zwischen 1/2 und 1/3 der Bit punktiert werden, dann ist das Vorgehen nach dem Stand der Technik aus folgenden Gründen nachteilig oder nicht optimal:

In diesem Fall werden bei der Eretübertragung zwischen 1/4 und 1/2 der parity Bits übertragen. Bei der Wiederholungsübertragung können mehr parity bit übertragen werden, in diesem Fall zwischen 3/4 und allen. In jedem Fall werden in Erstübertragung und Wiederholungsübertragung zusammen eine größere Anzahl von Parity-bits übertragen, als nach der Kodierung vorliegen. Es wäre somit theoretisch möglich, auch alle parity bits mindestens einmal zu übertragen. Allerdings wird das durch den vorgegebenen Algorithmus nach dem Stand der Technik nicht erreicht.

Der Grund für das Nicht-Übertragen einzelner Parity bit liegt in der gleichmäßigen Auswahl der Parity bits gemäß dem Ratenanpassungsalgorithmue nach dem Stand der Technik. Dies wird anhand des folgenden Beispiels kurz erläutert: Es wird angenommen, dass nach der Kodierung 20 systematische und je 20 Parity 1 und Parity 2 bit vorliegen; bei der Erstübertragung werden neben den 20 systematischen Bit noch 7 parity1 Bit und 7 Parity 2 Bit übertragen. Insgesamt werden also 20+2*7=34 Bit übertragen. Der Ratematching Algorithmus wählt diese Bit möglichst gleichmäßig aus. Diese Auswahl ist in der folgenden Tabelle zu sehen. In der Tabelle bezeichnet die erste Spalte den wert der Schleifenvariablen m des Ratematchingalgorithmus. In der zweiten Spalte ist der Wert der Fehlervariablen e zum Zeitpunkt der if- Abfrage angetragen (Der Wert 20 in der mit ini bezeichneten Zeile entspricht dem Initialwert von e, also $e_{ini}$). In der dritten Spalte sind die Bit angetragen, die vom Ratematchingalgorithmus ausgewählt werden. In diesem Fall wählt der Algorithmus die Abstände zwischen den Parity Bit zu 3, 3, 2, 3,3,3 (die letzte 3 entspricht dem Abstand mit wrap around von m=19 bis m=2).

In Spalten 4 (e) und 5 (Bit) sind die Werte von e und die ausgewählten Bit für die 2-te Übertragung (Spaltenüberschrift "2.") in derselben Weise, wie für die Erstübertragung angetragen. Bei der 2.ten Übertragung (der Wiederholungsübertragung) werden je 17 parity1 und parity2 Bit übertragen, insgesamt sind es wieder 2*17=34 Bit; dieselbe Anzahl wie in der Erstübertragung. Dies ist wichtig, da dann die gleichen Formate für die Übertragung genutzt werden können. Der Ratematchingalgorithmus wählt die nicht übertragenen Bit ebenfalls gleichmäßig aus, nämlich im Abstand 7, 6, 7 (letzter Abstand wieder wrap around von m=20 zu m=7).

In Spalte 6 (1+2) sind die Bit angetragen, die entweder in der ersten oder zweiten Übertragung (erstes Datenpaket oder Wiederholungsdatenpaket) übertragen wurden. Wie man sieht, ist diese Spalte in diesem Fall identisch mit der 5. Spalte, d.h. durch die Erstübertragung konnten keine "Löcher" in der zweiten Übertragung gestopft werden. Dies ist der ungünstigste Fall. Man könnte versuchen, durch andere Wahl des Startwertes für $e_{ini}$ eine Verschiebung des Patterns (Punktierungsmusters) für die zweite (oder auch die erste) Übertragung zu erreichen. Damit könnte man erreichen, dass zumindest einzelne der bei der ersten Übertragung übertragenen Bit auf Lücken der zweiten Übertragung treffen. Man kann auf diese Weise aber nicht erreichen, dass alle Lücken der zweiten Übertragung auf übertragene Bit in der ersten Übertragung treffen: Der Abstand zwischen Lücken in der zweiten Übertragung ist 7 oder 6, derjenige zwischen übertragenen Bits der Erstübertragung aber 3, 3, 2, 3,3,3. Ein Abstand von 6 ist durch die Kombination von zwei Abständen der Länge 3 erreichbar, ein Abstand von 7 aber nicht (Erreichbar sind 3+3 = 6, 2+3+3 =8). Auch bei beliebiger Verschiebung der Punktierungsmuster kann also nicht erreicht werden, dass beide nicht übertragenen Bit der zweiten Übertragung bei der Erstübertragung übertragen werden. Es gibt also nach dem Stand der Technik in jedem Fall nach der zweiten Übertragung mindestens ein Bit, welches in keiner Übertragung übertragen wurde.

| | | 1 | | 2 | 1+2 | | 2 opt. | 1+2 opt |
|---|---|---|---|---|---|---|---|---|
| m | e | Bit | e | Bit | | e | Bit | |
| ini | 20 | | 40 | | | 21 | | |
| 1 | -6 | | 34 | 1 | | 17 | 1 | 1 |
| 2 | 8 | 2 | 28 | 2 | 2 | -7 | | 2 |
| 3 | -18 | | 22 | 3 | 3 | 19 | 3 | 3 |
| 4 | -4 | | 16 | 4 | 4 | 5 | 4 | 4 |
| 5 | 10 | 5 | 10 | 5 | 5 | -9 | | 5 |
| 6 | -16 | | 4 | 6 | 6 | 17 | 6 | 6 |
| 7 | -2 | | -2 | | | 3 | 7 | 7 |
| 8 | 12 | 8 | 32 | 8 | 8 | -11 | | 8 |
| 9 | -14 | | 26 | 9 | 9 | 15 | 9 | 9 |

(fortgesetzt)

|  | | 1 | | 2 | 1+2 | 2 opt. | | 1+2 opt |
|---|---|---|---|---|---|---|---|---|
| m | e | Bit | e | Bit | | e | Bit | |
| 10 | 0 | | 20 | 10 | 10 | 1 | 10 | 10 |
| 11 | 14 | 11 | 14 | 11 | 11 | -13 | | 11 |
| 12 | -12 | | 8 | 12 | 12 | 13 | 12 | 12 |
| 13 | 2 | 13 | 2 | 13 | 13 | -1 | | 13 |
| 14 | -24 | | -4 | | | 25 | 14 | 14 |
| 15 | -10 | | 30 | 15 | 15 | 11 | 15 | 15 |
| 16 | 4 | 16 | 24 | 16 | 16 | -3 | | 16 |
| 17 | -22 | | 18 | 17 | 17 | 23 | 17 | 17 |
| 18 | -8 | | 12 | 18 | 18 | 9 | 18 | 18 |
| 19 | 6 | 19 | 6 | 19 | 19 | -5 | | 19 |
| 20 | -20 | | 0 | | | 21 | 20 | 20 |

Der Erfindung liegt die Aufgabe zu Grunde, eine technische Lehre anzugeben, welche eine zuverlässige und vorzugsweise einfache Übertragung von Daten ermöglicht.

Insbesondere liegt der Erfindung die Aufgabe zu Grunde, eine technische Lehre anzugeben, welche eine einfache und zuverlässige Übertragung von Daten gemäß einem ARQ-Verfahren ermöglicht, das eine Turbo-Codierung mit einer Rate zwischen 1/2 und 2/3 (unter Berücksichtigung der Ratenanpassung) umfasst und/oder ein Ratenanpassungsverfahren mit einer Punktierungsrate zwischen 1/2 und 1/3 umfasst.

Diese Aufgabe wird gelöst durch die Merkmale der unabhängigen Ansprüche. Vorteilhafte und zweckmäßige Weiterbildungen sind den abhängigen Ansprüchen zu entnehmen. Im Rahmen der Erfindung liegen dabei auch Weiterbildungen der unabhängigen Vorrichtungsansprüche, die den abhängigen Ansprüchen des Verfahrensanspruchs entsprechen.

Die Erfindung basiert zunächst auf der Erkenntnis, dass es nach dem Stand der Technik, insbesondere auch bei einer Punktierungsrate zwischen 1/2 und 1/3, nicht immer möglich ist, alle Paritätsbit mindestens einmal zu übertragen.

Ein weiter Schritt zur Erfindung liegt in der Erkenntnis, dass, insbesondere im genannten Bereich der Punktierungsrate, eine Übertragung aller Paritätsbit doch möglich ist.

Aufwändige Untersuchungen ergaben dann, dass, insbesondere im genannten Bereich der Punktierungsrate, eine Übertragung aller Paritätsbit dann möglich ist, wenn ein erstes Datenpaket die systematischen Bit enthält und einen Teil der Paritätsbit enthält, und ein Wiederholungsdatenpaket die Paritätsbit enthält, die im ersten Datenpaket nicht enthalten sind.

Weiter zeigten die aufwändigen der Erfindung zu Grunde liegenden Simulationen, dass, insbesondere bei Verwendung eines Ratenanpassungsalgorithmus zur Auswahl der in einem Datenpaket enthaltenen Bit, insbesondere im genannten Bereich der Punktierungsrate, eine Übertragung aller Paritätsbit dann möglich ist, wenn das Wiederholungsdatenpaket keine Paritätsbits enthält, die im ersten Datenpaket enthalten sind. Das bedeutet also, dass im Wiederholungsdatenpaket auch dann keine Paritätsbit wiederholt übertragen werden, wenn im Wiederholungsdatenpaket Platz dafür zur Verfügung stünde. Denn durch diese überraschende Anweisung kann erreicht werden, dass, insbesondere bei Verwendung eines Ratenanpassungsalgorithmus zur Auswahl der in einem Datenpaket enthaltenen Bit, zur Übertragung im Wiederholungsdatenpaket nur solche Paritätsbit ausgewählt werden, die nicht schon zur Übertragung im ersten Datenpaket ausgewählt wurden.

Die Erfindung beruht also schließlich auf dem Gedanken, insbesondere eine bestimmte Menge zu übertragender Daten durch eine Turbo-Codierung in systematische Bit und Paritätsbit umzusetzen. Von einem Sender wird an einen Empfänger ein erstes Datenpaket gesendet, das die systematischen Bit enthält und einen Teil der Paritätsbit enthält. Bei Vorliegen einer entsprechenden Aufforderung des Empfängers wird mindestens ein Wiederholungsdatenpaket an den Empfänger gesendet, das die Paritätsbit enthält, die im ersten Datenpaket nicht enthalten sind.

Es liegt dabei auch im Rahmen der Erfindung, dass die Paritätsbit nur aus einer bestimmten Gruppe von Paritätsbit besteht, neben der weitere Paritätsbit das Resultat der Turbocodierung sein können, die dann ebenfalls zusammen mit der bestimmten Gruppe von Paritätsbit oder separat von der bestimmten Gruppe von Paritätsbit einer Bitratenanpassung unterzogen werden.

Vorzugsweise enthält das Wiederholungsdatenpaket neben den Paritätsbits, die im ersten Datenpaket nicht enthalten sind, systematische Bit. Dadurch können systematische Mit wiederholt übertragen werden, wodurch die Zuverlässigkeit der Übertragung erhöht wird.

Wenn alle Paritätsbit im ersten Datenpaket oder im Wiederholungsdatenpaket genau einmal übertragen werden, so ergibt sich daraus eine besonders zuverlässige Übertragung der Daten.

Insbesondere bei der Anwendung des folgenden Ratenanpassungsalgorithmus zur Auswahl der in einem ersten Datenpaket und/oder Wiederholungsdatenpaken enthaltenen Bit wird im Rahmen der Erfindung erreicht, dass alle Paritätsbit im ersten Datenpaket oder im Wiederholungsdatenpaket genau einmal übertragen werden. Der (Bit-) Ratenanpassungsalgorithmus enthält folgende Verfahrensschritte:

a) Setzen der Fehlervariablen auf den Initialwert
b) Setzen des Bitindex auf das erste Bit
c) Subtraktion des Erniedrigungswertes der Fehlervariablen von der Fehlervariablen.
d) Falls die Fehlervariable kleiner oder gleich 0 ist durchführen der Schritte e) bis f)
e) Punktieren des durch den Bitindex angezeigten Bit
f) Addition des Erhöhungs-Wert zur Fehlervariablen
g) Erhöhen des Bitindex
h) wiederholen der Schritte c) bis g), bis der Bitindex die Anzahl der zu verarbeitenden Bit überschreitet.

Diese Verfahrensschritte führen zum gleichen Ergebnis, wie die Ausführung folgender Verfahrensschritte bzw. des folgenden Ratenanpassungsalgorithmus, dessen Einsatz alternativ zum soeben angegebenen Ratenanpassungsalgorithmus daher ebenfalls im Rahmen der Erfindung liegt.

```
e = e_ini              -- initial error between current and
    desired puncturing ratio

m = 1              -- index of current bit

do while m <= X_i

    e = e - e_minus              -- update error

    if e <= 0 then              -- check if bit number m
        should be punctured

        set bit x_i,m to δ where δ∉{0, 1}

        e = e + e_plus -- update error

    end if

    m = m + 1              -- next bit

end do
```

Hierbei bezeichnen:

$e_{ini}$ den Initialwert der Fehlervariablen
e den aktuellen Wert der Fehlervariablen
$e_{minus}$ den Erniedrigungs-Wert der Fehlervariablen
$e_{plus}$ den Erhöhungs-Wert der Fehlervariablen
$X_i$ die Anzahl der zu verarbeitenden Bit
m den Schleifenindex
$x_{i,m}$ das Bit Nummer m
δ die Bezeichnung für ein punktiertes d.h. entferntes Bit

Vorzugsweise wird also im Rahmen der Erfindung der gleiche Ratenanpassungsalgorithmus eingesetzt, der in einem UMTS-System für andere Zwecke ohnehin schon eingesetzt wird. Dadurch kann der Ratenanpassungsalgorithmus mit weniger Aufwand implementiert werden.

Vorzugsweise wird der Initialwert $e_{ini}(r)$ für die Fehlervariable des Ratenanpassungsalgorithmus derart gewählt, dass das Wiederholungsdatenpaket keine Paritätsbits enthält, die im ersten Datenpaket enthalten sind, und vorzugsweise alle Paritätsbit enthält, die im ersten Datenpaket nicht enthalten sind.

Vorzugsweise gilt für den Einsatz des Ratenanpassungsalgorithmus zur Auswahl der im ersten Dantepaket bzw. Wiederholungsdatenpaket enthaltenen oder zu übertragenden Paritätsbit:

$$e_{ini}(r) = \left\{ \left( X_i - \left\lceil (r+1) \cdot e_{plus} / r_{max} \right\rceil \right) \bmod e_{plus} \right\} + 1 ,$$

wobei gilt:

$e_{ini}(r)$ = der Initialwert für die Fehlervariable;
r= 0, falls der Ratenanpassungsalgorithmus in Zusammenhang mit dem ersten Datenpaket angewendet wird;
r= 1, falls der Ratenanpassungsalgorithmus in Zusammenhang mit einem Wiederholungsdatenpaket angewendet wird.

Vorzugsweise gilt für den Einsatz des Ratenanpassungsalgorithmus zur Auswahl der Paritätsbit im ersten Datenpaket:

$$e_{ini}(r) = \left\{ \left( X_i - \left\lfloor r \cdot e_{plus} / r_{max} \right\rfloor - 1 \right) \bmod e_{plus} \right\} + 1 ;$$

vorzugsweise gilt für den Einsatz des Ratenanpassungsalgorithmus zur Auswahl der Paritätsbit im Wiederholungsdatenpaket:

$$e_{ini}(r) = \left\{ \left( X_i - \left\lceil (r+1) \cdot e_{plus} / r_{max} \right\rceil \right) \bmod e_{plus} \right\} + 1 ;$$

dabei gilt:

$e_{ini}(r)$ = der Initialwert für die Fehlervariable;
r= 0, falls der Ratenanpassungsalgorithmus in Zusammenhang mit dem ersten Datenpaket angewendet wird;
r= 1, falls der Ratenanpassungsalgorithmus in Zusammenhang mit dem Wiederholungsdatenpaket angewendet wird; rmax = 2.

Folgende aufwändige Untersuchungen zeigten, dass insbesondere bei der angegebenen Wahl des Initialwertes für die Fehlervariable $e_{ini}$ für die Ratenanpassung im Falle des ersten Datenpaketes und/oder des Wiederholungsdatenpaketes alle Paritätsbit insgesamt einmal übertragen werden:

Insbesondere ist es eine Aufgabe der vorliegenden Erfindung, eine technische Lehre anzugeben, die für viele Fälle sicherstellt, dass alle parity bit (Paritätsbit) übertragen werden, d.h. jedes Bit wird mindestens einmal in der Erstübertragung (im ersten Datenpaket) oder der Zweitübertragung (im Wiederholungsdatenpaket) übertragen. Dieses Ziel wird erreicht, indem weniger als die maximal mögliche Anzahl von parity Bit in der zweiten Übertragung (im Wiederholungsdatenpaket) übertragen werden (siehe oben). Dabei werden die Anzahl der in der zweiten Übertragung übertragenen Bit und die Verschiebung des Punktierungemustere so geschickt gewählt, dass jedes Parity Bit genau einmal, entweder in der Erstübertragung oder der zweiten Übertragung, übertragen wird.

Zur Herleitung des optimalen Vorgehens wird der bekannte Ratematchingalgorithmus - in etwas anderer Form - noch einmal betrachtet:

Algorithmus für Analyse der Erstübertragung, genannt A1:

```
e₁ = e_ini1 - e_minus1          -- Initialisierung des
   Startwertes

m = 1                 -- m ist Zähler f. die Bit

do while m <= X_i

   if e₁ <= 0 then          -- Überprüfung
      Punktierung/Verwendung des bit m

      punktiere bit x_{i,m}

      e₁ = e₁ + e_plus1 - e_minus1 -- Erhöhung u. Erniedrigung
         der Fehlervariablen


   else

      verwende bit x_{i,m}

      e₁ = e₁ - e_minus1    -- Erniedrigung der Fehlervariablen

   end if

   m = m + 1              --   nächstes Bit

end do
```

Es wird zur Notation noch ein weiterer Index eingeführt, welcher zwischen Erst- und Zweit-Übertragung unterscheidet, also zwischen A1 und A2. Die Variablen werden jeweils bezeichnet mit:

statt $e$ mit $e_1$ und $e_2$
statt $e_{ini}$ mit $e_{ini1}$ und $e_{ini2}$
statt $e_{minus}$ mit $e_{minus1}$ und $e_{minus2}$
statt $e_{plus}$ mit $e_{plus1}$ und $e_{plus2}$

Hierbei wird die Dekrementierung von e nicht am Anfang der Schleife gemacht, sondern für den ersten Schleifendurchlauf in der Initialisierung und für die weiteren Schleifendurchläufe im if- oder else Zweig des vorherigen Schleifendurchlaufs. Diese Umformulierung des Ratematchingalgorithmus verwenden wir für die Analyse der Erstübertragung. (Es sei hier noch erwähnt, dass für eine Implementierung natürlich eine beliebige Variante der Implementierung des Algorithmus verwendet werden kann, wir betrachten hier spezielle Varianten um einfacher die optimalen Parameter für beide Übertragungen anwenden zu können.)
Für die Analyse der zweiten Übertragung formulieren wir den Algorithmus nochmals etwas um, indem wir den if- und else Zweig vertauschen, dadurch erreicht dass die Bedingung e<=0 umgekehrt wird zu e>=1. Dies sind zueinander inverse Bedingungen, d.h. die zweite ist genau dann erfüllt, wenn die erste nicht erfüllt ist und umgekehrt.
Algorithmus für Analyse der zweiten Übertragung, genannt A2:

```
e₂ = e_ini2 - e_minus2          -- Initialisierung des
     Startwertes

m = 1              -- m ist Zähler f. die Bit

do while m <= X_i

    if e₂ >= 1 then            -- Überprüfung
        Punktierung/Verwendung des bit m

        verwende bit x_i,m

        e₂ = e₂ - e_minus2    -- Erniedrigung der Fehlervariablen

    else

        punktiere bit x_i,m

        e₂ = e₂ + e_plus2    - e_minus2    -- Erhöhung u.
            Erniedrigung der Fehlervariablen

    end if

    m = m + 1              --  nächstes Bit

end do
```

Ziel ist es, zu erreichen, dass bei jedem Bit, also für alle m, dann bei A2 das Bit verwendet bzw. übertragen wird, wenn bei A1 punktiert wird, und umgekehrt.

Beide Algorithmen A1 und A2 sollen also für ein gegebenes m beide in den if-Zweig oder beide in den else-Zweig laufen. Dies lässt sich realisieren, wenn für jede Iteration, d. h. für jedes m gilt:

$$e_2 = 1 - e_1$$

Denn dann ist die Bedingung aus A2, nämlich $e_2 >= 1$ gleichbedeutend mit $1 - e_1 >= 1$, denn daraus folgt: $- e_1 >= 0$ und $e_1 <= 0$ also gleichbedeutend mit der Bedingung in A1.

Die Gleichheit $e_2 = 1 - e_1$ ist dann gegeben, wenn dies erstens für den Initialwert beim Eintritt in die schleife gilt, und zweitens die Update-Operationen in den beiden schleifen im If- und Else-Zweig entsprechend sind.

"erstens" bedeutet:

$e_2 = 1 - e_1$ beim Schleifeneintritt, Nach Einsetzen der Abhängigkeit von $e_{ini1}$ und $e_{ini2}$ erhält man:

$$e_{ini2} - e_{minus2} = 1 - e_{ini1} - e_{minus1}$$

"zweitens" bedeutet, dass die veränderungen von e sowohl im if-Zweig also auch im elee-Zweig gleich sein müssen:

$$+ e_{plus1} - e_{minus1} = - e_{minus2}$$

und

$$- e_{minus1} = + e_{plus2} - e_{minus2}$$

Durch Einsetzen der Definitionen von $e_{minus}$ und $e_{plus}$ aus dem Zitat der Spezifikation kann man verifizieren, dass das dann der Fall ist, wenn in der Zweiten Übertragung die Differenz aus der Anzahl der vorhandenen parity bits minus der in der ersten Übertragung gesendeten parity bits ist. Diese Gleichung soll sowohl für die parity 1 bits und parity 2 bits gelten. Damit ist der Kern der Erfindung, nämlich in der zweiten Übertragung exakt so viele parity bits zu senden, wie bei der ersten Übertragung gefehlt haben auch über den Ratematchingalgorithmus hergeleitet.

Damit beide Punktierungsmuster ineinander greifen, soll auch die erste Bedingung erfüllt sein, nämlich

$$e_{ini2} - e_{minus2} = 1 - \overline{e_{ini1} - e_{minus1}}$$

Hierfür gibt es viele Lösungen, für jedes vorgegebene $e_{ini1}$ kann man ein dazu passendes $e_{ini2}$ bestimmen. Es ist aus praktischen Gründen vorteilhaft, die Definition von $e_{ini1}$ beizubehalten, da mit dieser Definition bereits gute Ergebnisse in vielen Simulationen erzielt worden sind (selbstverständlich sind aber auch die übrigen Lösungen von der Erfindung umfasst). Dann kann man ausrechnen, dass für $e_{ini2}$ gilt:

$$e_{ini2}(r) = \left\{\left(X_i - \left\lceil (r+1) \cdot e_{plus} / r_{max} \right\rceil\right) \bmod e_{plus}\right\} + 1$$

Dabei wurde schon berücksichtigt, dass der Parameter r für die erste Übertragung auf r=0 gesetzt wird, für die zweite Übertragung aber auf r=1, und dass für die erste Übertragung festgelegt wurde

$$e_{ini1}(r) = \left\{\left(\overline{X_i} - \left\lfloor r \cdot e_{plus} / r_{max} \right\rfloor - 1\right) \bmod e_{plus}\right\} + 1$$

Mit dieser Wahl der Anzahl der Parity bits und dieser Wahl von $e_{ini}$ für die zweite Übertragung kann man erreichen, dass die Muster optimal ineinander greifen.

Dies ist in der obigen Tabelle in den Spalten 7 und 8 (beide überschrieben mit 2 opt.) gezeigt. Wieder ist der Wert von e in Abhängigkeit von m angetragen und die ausgewählten Bit sind dargestellt. In der letzten Spalte (1+2 opt) sind die Bit aufgeführt, welche nun entweder in der ersten oder zweiten Übertragung gesendet werden. Wie man sieht wird nun tatsächlich jedes Bit übertragen. Bei der zweiten Übertragung werden exakt diejenigen Bit übertragen, welche in der ersten Übertragung nicht übertragen wurden. Dadurch wird eine deutliche Verbesserung der Übertragungseigenschaften erreicht.

Durch die Erfindung lässt sich also überraschenderweise mit der Anwendung eines für andere Zwecke bereits verwendeten Algorithmus eine deutliche Verbesserung der Übertragungseigensehaften erreichen, wenn lediglich bei der Wiederholungsübertragung die Parameter zur Berechnung der Anzahl der Parity 1 und parity 2 bit und die Berechnung von $e_{ini}$ angepasst wird. Die Formeln hierfür sind nicht komplexer als die Formeln gemäß dem Stand der Technik.

Es werden vorzugsweise bei der zweiten Übertragung weniger Parity Bits übertragen, als nach dem Stand der Technik vorgesehen. Die übrigen Bit werden dann vorzugsweise mit Systematischen Bit aufgefüllt. Dies hat noch einen weiteren Vorteil: Sollte ein Empfänger die Erstübertragung aus irgendwelchen Gründen komplett nicht empfangen z.B. weil eine zugehörige Signalisierungsinformation nicht korrekt empfangen werden konnte, so wird er nur die zweite Übertragung empfangen. Da diese zweite Übertragung nun mehr systematische Bit enthält als nach dem Stand der Technik vorgesehen, lässt sie sich leichter dekodieren, was wiederum die Systemeigenschaften verbessert. Des weiteren liegen auch bei der Detektion der Erst- und Zweit-Übertragung bessere Informationen über die systematischen Bit vor, da von diesen nun einige doppelt (in der ersten und zweiten Übertragung) übertragen werden. Auch dies verbessert, wie bei der Untersuchung von HSDPA gezeigt wurde, die Performanz, also die Dekodierwahrscheinlichkeit. Bei HSDPA wurde eine Verbesserung der Qualität durch sog. SMP (Signal Mapping Priority) erzeugt, dabei wurden systematische Bit im Vergleich und im Unterschied zu parity Bit auf Modulationosymbole abgebildet, welche eine bessere Dekodierungseigenschaft hatten, dadurch wurde eine bessere Empfangsqualität der Systematischen Bits und dadurch bessere Dekodiereigenschaft erreicht. Dieses Verfahren ist aber nur bei höheren Modulationen (z.B. 16 QAM) anwendbar, und daher bei E-DCH so nicht anwendbar. Durch die optimierte Punktierung bei der Wiederholungsübertragung lässt sich aber ein ähnlicher Effekt erzielen, so dass eine ähnliche Verbesserung der Systemleistung erreicht werden kann.

Diese Erläuterungen der aufwändigen - der Erfindung zu Grunde liegenden - Untersuchungen und Überlegungen sollen lediglich den Hintergrund der komplexen Erfindung und ihrer Ausgestaltungen beleuchten, die Erfindung aber keinesfalls auf bestimmte bevorzugte Ausgestaltungen einschränken.

Vorzugsweise werden die Punktierungsmuster für den Fall des ersten Datenpaketes und den Fall des Wiederholungsdatenpaketes zueinander verschachtelt.

Vorzugsweise wird das erfindungsgemäße Verfahren zur Datenübertragung im Rahmen eines Hybrid-ARQ Verfahrens zur Realisierung des HSDPA oder des EDCH (E-DCH) eingesetzt.

wie bereits mehrfach erläutert, werden die in einem Datenpaket oder Wiederholungsdatenpaket enthaltenen Paritätsbit gemäß einer bevorzugten Ausgestaltung der Erfindung durch einen Ratenanpassungsalgorithmus aus den aus der Turbocodierung resultierenden Paritätsbit ausgewählt. Werden durch den Ratenanpassungealgorithmua bestimmte Bit aus einer Menge von Bit ausgewählt, weil nicht alle Bit aus der Menge von Bit übertragen werden oder in einem Datenpaket enthalten sind, so wirkt der Ratenanpassungsalgorithmus als Punktierungsalgorithmus. Die durch den Punktierungsalgorithmus punktierten Bit werden nicht übertragen und sind in dem entsprechenden Datenpaket nicht enthalten. Die übrigen Bit sind in dem entsprechenden Datenpaket enthalten.

Insbesondere wenn die Punktierungsrate zwischen 1/2 und 1/3 liegt oder die Kodierrate zwischen 1/2 und 2/3 liegt, wird im Rahmen der Erfindung erreicht, dass alle Paritätsbit im ersten Datenpaket oder im Wiederholungsdatenpaket genau einmal übertragen werden.

Vorzugsweise liegt die Punktierungsrate des Ratenanpassungealgorithmus zwischen ½ und 1/3, sowohl für die Erstübertragung als auch die Wiederholungsübertragung. Bei der Erstübertragung werden dabei zwischen 1/4 und 1/2 der parity Bits übertragen. Bei der Wiederholungsübertragung könnten damit mehr parity bit übertragen werden, nämlich zwischen 3/4 und allen. Erfindungsgemäß werden aber nur die von der Erstübertragung noch fehlenden parity Bit übertragen.

Vorzugsweise liegt die Kodierungsrate des Turbocoders unter Berücksichtigung der Ratenanpassung zwischen 2/3 und ½ liegt.

Die Erfindungsmeldung betrachtet insbesondere den Fall, dass zwischen 1/2 und 1/3 der Bit punktiert werden. Dies entspricht einer Kodierungsrate zwischen 2/3 und 1/2. In Rahmen dieser Erfindung wird der Einfluss der sog. Terminierung (Tail Bits) auf die von Turbo-Code generierten Bits nicht näher betrachtet. Wie in UMTS kann man z.B. ein Drittel der Terminierungsbits den Systematischen Bit, den Parity 1 und den Parity 2 Bits zuschlagen. Streng genommen ist die Kodierungsrate durch den Einfluss der Terminierungsbits etwas geringer als angegeben, da man für die Berechnung der Kodierungsrate streng genommen auch die Terminierungsbits berücksichtigen müsste. Diese Feinheit ist aber für die Erfindung ohne Belang, weshalb beide Berechnungsarten durch die Erfindung umfasst sind. Für die Erfindung ist die Gesamtzahl der Parity 1 und Parity 2 Bits relevant, unabhängig davon ob es sich um "echte" Parity bit handelt oder Terminierungsbit.

Selbstverständlich umfasst die Erfindung auch Datenübertragungen, bei denen neben den genannten Punktierungsraten oder Koderaten beliebige andere Punktierungsraten oder Koderaten zum Einsatz kommen, wobei bei den anderen Punktierungsraten oder Koderaten auch beliebige andere Ratenanpasaungsverfahren oder Initialwerte für die Fehlervariable eingesetzt werden können. Insbesondere liegen Datenübertragungen im Rahmen der Erfindung, bei denen bei einer Punktierungsrate zwischen 1/2 und 1/3 eine Ratenanpassung oder Bitauswahl gemäß den Verfahrensansprüchen angewendet wird, und bei denen bei anderen Punktierungsraten eine Ratenanpassung oder Bitauswahl gemäß dem Stand der Technik, insbesondere gemäß dem Ratenanpassungsalgorithmus gemäß dem derzeit aktuellen UMTS-Standard (siehe oben) verwendet wird.

Im Rahmen der Erfindung liegt auch ein hardwaretechnisch und/oder softwaretechnisch entsprechend eingerichteter Sender, der insbesondere eine Mobilstation oder eine Basisstation umfasst, und ein hardwaretechnisch und/ oder softwaretechnisch entsprechend eingerichteter Empfänger, der insbesondere eine Basisstation oder eine Mobilstation umfasst.

Der Sender umfasst eine Prozeasoreinrichtung, die derart eingerichtet ist,

- dass Daten durch eine Turbo-Codierung in systematische Bit und Paritätsbit umgesetzt werden,
- dass von dem Sender an einen Empfänger ein erstes Datenpaket gesendet wird, das die systematischen Bit enthält und einen Teil der Paritätsbit enthält, und
- dass bei vorliegen einer entsprechenden Aufforderung des Empfängers mindestens ein Wiederholungsdatenpaket an den Empfänger gesendet wird, das die Paritätsbit enthält, die im ersten Datenpaket nicht enthalten sind.

Der Empfänger zum Empfang von Daten in Form von Datenpaketen, wobei die Daten durch eine Turbo-Codierung in systematische Bit und Paritätsbit umgesetzt sind, umfasst eine Prozessoreinrichtung, die derart eingerichtet ist,

- dass ein erstes Datenpaket, das die systematischen Bit und einen Teil der Paritätsbit enthält, empfangen wird,
- dass ein Widerholungsdatenpaket vom Sender angefordert wird, wenn das erste Datenpaket empfangsseitig nicht korrekt decodiert wird, und
- dass ein gesendetes Wiederholungsdatenpaket empfangen wird, das die Paritätsbit enthält, die im ersten Datenpaket nicht enthalten sind.

Die vorliegende Erfindung wird nachfolgend näher unter Bezugnahme auf die beigefügten Zeichnungen anhand bevorzugter Ausführungsbeispiele einer paketorientierten Datenübertragung in einem Mobilfunksystem erläutert, wobei die vorliegende Erfindung selbstverständlich nicht auf Mobilfunksysteme beschränkt ist, sondern allgemein in jeder Art von Kommunikationssystemen eingesetzt werden kann, in denen insbesondere ein ARQ-Verfahren zur Datenübertragung vorgesehen ist.

Figur 1 zeigt eine Darstellung zur Verdeutlichung der Signalverarbeitung gemäß einem paketorientierten ARQ-Verfahren,

Figur 2 zeigt eine Darstellung zur Verdeutlichung der Kommunikation in einem Mobilfunksystem.

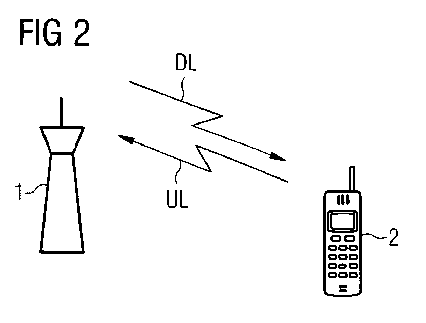

Wie bereits zuvor erläutert worden ist, wird nachfolgend davon ausgegangen, dass mit Hilfe der vorliegenden Erfindung eine paketorientierte Datenübertragung in einem Mobilfunksystem, wie es beispielsweise schematisch in Figur 2 gezeigt ist, realisiert werden soll. Dabei ist in Figur 2 beispielhaft die Kommunikation zwischen einer Basisstation 1 und einer Mobilstation 2 eines Nobilfunkeystems, z.B. eines UMTS-Mobilfunksystems, dargestellt. Die Übertragung von Informationen von der Basisstation 1 zu der Mobilstation 2 erfolgt über den so genannten "Downlink"-Kanal DL, während die Übertragung der Informationen von der Mobilstation 2 zu der Basisstation 1 über den so genannten "Uplink"-Kanal UL erfolgt.

Die vorliegende Erfindung wird nachfolgend beispielhaft anhand einer paketorientierten Datenübertragung von der Basisstation 1 an die Mobilstation 2, d.h. anhand einer paketorientierten Datenübertragung über den "Downlink"-Kanal erläutert, wobei die vorliegende Erfindung jedoch analog auf eine Datenübertragung über den "Uplink"-Kanal anwendbar ist. Des Weiteren wird die vorliegende Erfindung nachfolgend anhand der in dem jeweiligen Sender durchzuführenden Signalverarbeitungsmaßnahmen erläutert, wobei jedoch zu beachten ist, dass in dem jeweiligen Empfänger zur Auswertung der auf diese weise senderseitig verarbeiteten Daten eine entsprechende Signalverarbeitung in umgekehrter Reihenfolge erforderlich ist, so dass von der vorliegenden Erfindung nicht nur die Senderseite, sondern auch die Empfängerseite betroffen und umfasst ist. Im Empfänger wird zwar keine Punktierung vorgenommen in dem Sinne, dass aus einem Bitstrom Bit ausgewählt werden, die dann nicht übertragen werden. Aber der Empfänger realisiert vorzugsweise einen entsprechenden Algorithmus, der berücksichtigt, welche Bit punktiert, also nicht übertragen wurden, um die Beziehung der tatsächlich übertragenen Bit zu den Bit des ursprünglichen kodierten Bitstrom korrekt festzustellen. Die punktieren Bit können natürlich nicht wiederhergestellt werden, aber es wird empfangsseitig die Identität der übertragenen Bit korrekt festgestellt, um sie für die Dekodierung korrekt verwenden zu können.

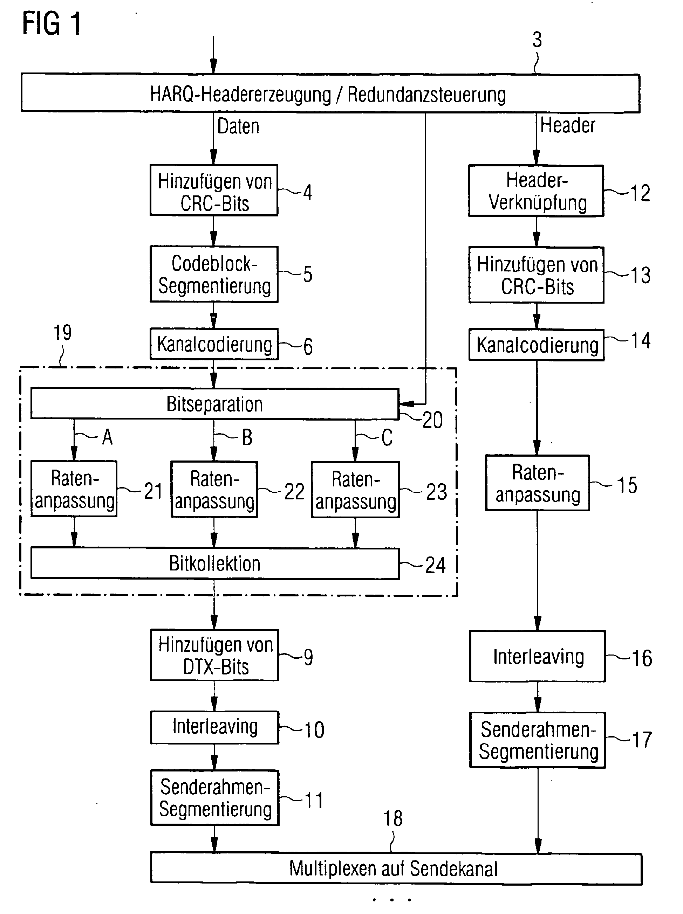

In Figur 1 ist die Signalverarbeitung der in den Datenpaketen zu übertragenden Daten- und Headerinformationen nach einem Hybrid-ARQ-Verfahren dargestellt.

Auf der Headerseite werden die von einem Funktionsblock 3 erzeugten Headerinformationen einem Funktionsblock 12 zugeführt, welcher dafür sorgt, dass sämtliche Header von allen Datenpaketen, die in ein und demselben Funkpaket gesendet werden sollen, zu einem einzigen Header zusammengefasst werden (sogenannte "Header Concatenation"). Ein Funktionsblock 13 fügt den daraus resultierenden Headerinformationen CRC-Bits zur Headererkennung hinzu. Anschließend wird von einem Funktionsblock 14 eine Kanalcodierung und von einem Funktionsblock 15 eine Ratenanpassung des daraus resultierenden Bitstroms durchgeführt. Ein Interleaver 16 bewirkt, dass die ihm zugeführten Symbole bzw. Bits auf bestimmte Art und Weise umgeordnet und zeitlich gespreizt werden. Die von dem Interleaver 16 ausgegebenen Datenblöcke werden von einem Funktionsblock 17 den einzelnen Sende- bzw. Funkrahmen zugeordnet (sogenannte "Radio Frame Segmentation"). Die Kodierung der Headerinformation ist allerdings für die Erfindung nur von untergeordneter Bedeutung.

Auf der Datenseite ist ebenso ein Funktionsblock 4 zum Hinzufügen von CRC-Bits vorgesehen. Ein Funktionsblock 5 dient zur Aufspaltung der einem Kanalcodierer 6 zugeführten Daten derart, dass von dem Kanalcodierer 6 stets eine auf eine bestimmte Bitanzahl beschränkte Codierung durchgeführt werden kann.

Durch die von dem Kanalcodierer 6 durchgeführte Kanalcodierung wird den eigentlich zu sendenden Daten redundante Information hinzugefügt. Das hat zur Folge, dass mehrere nacheinander gesendete Datenpakete Bits mit gleichem Informationsursprung aufweisen.

Die von dem Kanalcodierer 6 ausgegebenen Bits werden einem Funktionsblock 19 zugeführt, welcher durch Ausblenden bzw. Weglassen einzelner Bits (so genannte Punktierung) oder durch Wiederholen einzelner Bits (so genannte Repetierung) die Bitrate des Bitstroms entsprechend einstellt. Von einem anschließenden Funktionsblock 9 können dem Datenstrom sogenannte DTX-Bits ("Discontinuous Transmission") hinzugefügt werden. Des Weiteren sind auch auf der Datenaeite Funktionsblöcke 10 und 11 vorgesehen, welche dieselben Funktionen wie die auf der Headerseite vorgesehenen Funktionsblöcke 16 und 17 wahrnehmen.

Abschließend werden die auf der Daten- und Headerseite ausgegebenen Bits von einem Funktionsblock 18 auf den jeweils vorhanden physikalischen Übertragungs- bzw. Sendekanal abgebildet bzw. gemultiplexed (so genanntes "Multiplexing") und mit Hilfe einer geeigneten Modulation, beispielsweise einer QAM-Modulation, an den Empfänger übertragen.

Bei dem Hybrid-ARQ-Typ I-Verfahren wird bei einem fehlerhaften Empfang bzw. einer fehlerhaften Decodierung eines Datenpakets durch den Empfänger ein Wiederholungsdatenpaket angefordert, welches mit dem zuvor gesendeten und fehlerhaft empfangenen Datenpaket ganz oder teilweise identisch ist. Abhängig davon, ob das Wiederholungsdatenpaket weniger oder gleich viele Daten wie das ursprüngliche Datenpaket aufweist, wird von einer vollen oder partiellen Wiederholung gesprochen. Das Datenpaket und das jeweilige Wiederholungsdatenpaket weisen somit Bits mit einem zumindest teilweise gleichen Informa-tionsursprung auf. Der Empfänger kann somit durch gemeinsame Auswertung des ursprünglich gesendeten Datenpakets sowie der angeforderten nachfolgenden Wiederholungsdatenpakete die ursprünglich gesendete Information mit besserer Qualität wiedergewinnen.

Die vorliegende Erfindung betrifft im Wesentlichen den in Figur 1 gezeigten Funktionsabschnitt 19. Dieser Funktionsabschnitt 19 umfasst einen Funktionsblock 20, welcher in Abhängigkeit von einer Ansteuerung durch den Funktionsblock 3 die von dem vorgeschalteten Kanalcodierer 6 ausgegebenen codierten Bits auf mindestens zwei parallele Teilbitströme aufteilt, welche jeweils separat, d.h. unabhängig voneinander, einer Ratenanpassung unterzogen werden. In Figur 1 sind diesbezüglich drei Teilbitströme A-C dargestellt, wobei für jeden Teilbitstrom ein Funktionsblock 21-23 zur Durchführung einer entsprechenden Ratenanpassung, d.h. zur Punktierung oder Repetierung einzelner Bits, vorgesehen ist. Auf diese Weise entstehen mehrere unterschiedlich codierte parallele Teilbitströme, welche einem weiteren Funktionsblock 24 zugeführt werden. Dieser weitere Funktionsblock 24 hat die Aufgabe, die einzelnen Bits der parallelen Bitströme in derselben Reihenfolge, welche von dem Funktionsblock 20 für die Bitseparation, d.h. für die Aufteilung auf einzelnen parallelen Teilbitströme, verwendet worden ist, aufzusammeln (Bitkollektion). Auf diese Weise wird sichergestellt, dass sich insgesamt die Reihenfolge der nach der Ratenanpassung übrig gebliebenen Bits nicht ändert.

Wie bereits zuvor erläutert worden ist, kann die für die einzelnen Teilbitströme A-C vorgesehene Ratenanpassung durch die Funktionsblöcke 21-23 vollkommen unabhängig voneinander erfolgen. Insbesondere können auch die Bits eines oder mehrerer Teilbitströme überhaupt keiner Punktierung oder Repetierung unterzogen werden. Insgesamt ist die Ratenanpassung der einzelnen parallelen Teilbitströme A-C so zu wählen, dass von dem gesamten Funktionsabschnitt 19 auf den von dem Funktionsblock 6 ausgegebenen kanalcodierten Bitstrom pro Datenpaket bzw. Wiederholungsdatenpaket ein gewünschtes Ratenanpassungsmuster angewendet wird. Mit der in Figur 1 gezeigten Realisierung des Funktionsabschnitts 19 mit mehreren parallel durchgeführten Ratenanpassungen kann eine äußerst hohe Flexibilität bei der Codierung erzielt werden.

Der Funktionsabschnitt 19 ist derart ausgestaltet, dass er in Abhängigkeit von der Ansteuerung durch den Funktionsblock 3 auf die Bits eines Wiederholungsdatenpakets ein anderes Ratenanpassungsmuster als auf die Bits des entsprechenden ursprünglich gesendeten Datenpakets anwendet. D.h. dem Funktionsabschnitt 19 wird von dem Funktionsblock 3 mitgeteilt, ob von dem jeweiligen Empfänger ein Wiederholungsdatenpaket angefordert worden ist, wobei der Funktionsabschnitt 19 in diesem Fall die von den einzelnen Funktionsblöcken 21-23 realisierten Ratenanpassungsmuster derart wählt bzw. einstellt, dass insgesamt die Bits des Wiederholungsdatenpakets mit einem anderen Ratenanpassungsmuster als die Bits des zu Grunde liegenden ursprünglich gesendeten Datenpakets verarbeitet werden.

Die insgesamt von dem Funktionsabschnitt 19 realisierte Ratenanpassung kann beispielsweise gemäß dem Ratenanpassungsalgorithmus, welcher an sich bereits aus dem Stand der Technik (siehe oben) bekannt ist, durchgeführt werden.

Die soeben erläuterten Funktionsabschnitte, insbesondere der Funktionsabschnitt 19, kann dabei so eingerichtet sein, dass eine oder mehrere der folgenden Ausgestaltungen in die Praxis umgesetzt werden:

- Zur Datenübertragung in Form von Datenpaketen werden die Date Daten durch eine Kanalcodierung, insbesondere eine Turbo-Codierung, in systematische Bit und Paritätsbit umgesetzt. Von dem Sender wird an den Empfänger ein erstes Datenpaket gesendet, das die systematischen Bit und einen Teil der Paritätsbit enthält. Bei Vorliegen einer entsprechenden Aufforderung des Empfängers (2) wird mindestens ein Wiederholungsdatenpaket an den Empfänger (2) gesendet, das die Paritätsbit enthält, die im ersten Datenpaket nicht enthalten sind.

- Das Wiederholungsdatenpaket enthält keine Paritätsbit, die im ersten Datenpaket enthalten sind.

- Das Wiederholungsdatenpaket enthält neben den Paritätzbit, die im ersten Datenpaket nicht enthalten sind, systematische Bit.

- Die Kodierungsrate des Turbocoders liegt unter Berücksichtigung der Ratenanpassung zwischen 2/3 und ½.

- Die in einem Datenpaket oder Wiederholungsdatenpaket enthaltenen Paritätsbit werden durch einen Ratenanpassungsalgorithmus aus den aus der Turbocodierung resultierenden Paritätsbit ausgewählt.

- Die Punktierungsrate des Ratenanpassungsalgorithmus liegt zwischen ½ und 1/3.

- Der Initialwert der Fehlervariablen des Ratenanpassungsalgorithmus wird derart gewählt, dass das Wiederholungsdatenpaket keine Paritätsbits enthält, die im ersten Datenpaket enthalten sind.

- Der Ratenanpassungsalgorichmus enthält folgende Verfahrensschritte:

    a) Setzen der Fehlervariablen auf den Initialwert
    b) Setzen des Bitindex auf das erste Bit
    c) Subtraktion des Erniedrigungswertes der Fehlervariablen von der Fehlervariablen.
    d) Falls die Fehlervariable kleiner oder gleich 0 ist durchführen der Schritte e) bis f)
    e) Punktieren des durch den Bitindex angezeigten Bit
    f) Addition des Erhöhungs-Wert zur Fehlervariablen
    g) Erhöhen des Bitindex
    h) wiederholen der Schritte c) bis g), bis der Bitindex die Anzahl der zu verarbeitenden Bit überschreitet.

- Für den Einsatz des Ratenanpassungsalgorithmus zur Auswahl der im ersten Datenpaket enthaltenen Paritätsbit gilt:

$$e_{ini}(r) = \left\{ \left( X_i - \left\lfloor r \cdot e_{plus} / r_{max} \right\rfloor - 1 \right) \bmod e_{plus} \right\} + 1$$

und für den Einsatz des Ratenanpassungsalgorithmus zur Auswahl der im Wiederholungsdatenpaket enthaltenen Paritätsbit gilt:

$$e_{ini}(r) = \left\{ \left( X_i - \left\lceil (r+1) \cdot e_{plus} / r_{max} \right\rceil \right) \bmod e_{plus} \right\} + 1 \,,$$

wobei gilt:
$e_{ini}(r)$ = der Initialwert für die Fehlervariable;
r= 0, falls der Ratenanpassungsalgorithmus in Zusammenhang mit dem ersten Datenpaket angewendet wird;
r= 1, falls der Ratenanpassungsalgorithmus in Zusammenhang mit dem Wiederholungsdatenpaket angewendet wird.
Empfangsseitig werden das erste Datenpaket und das Widerholungsdatenpaket zusammen, insbesondere durch ein so genanntes combining (Zusammenfassen) auch soft combining (zusammenfassen der soft-decission Werte, also Zusammenfassen der Wahrscheinlichkeiten, dass einzelne Bit der Wert 1 bzw. 0 haben), decodiert.
Die Erfindung eignet sich insbesondere für den Fall, dass die Kodierungsrate im Bereich zwischen 2/3 und 1/2 ist; das ist der Fall, wenn zwischen 1/2 und 1/3 der Bit punktiert werden. In diesem Fall werden bei der Eretübertragung zwischen 1/4 und 1/2 der parity Bits übertragen und in der Zweitübertragung mindestens 3/4 der Parity bits, insgesamt können also in Erst- und Zweitübertragung alle Parity Bit übertragen werden. Bei höheren Kodierungsraten als 2/3 ist dies nicht mehr der Fall, deshalb werden die oben angegebenen Formeln dann vorzugsweise nicht direkt angewandt. Es ist dann insbesondere nicht mehr möglich für die Zweitübertragung genau die Parity Bit auszuwählen, die in der Erstübertragung nicht übertragen wurden, da nicht alle fehlenden in der Zweitübertragung übertragen werden können. Allerdings kann der Startwert $e_{ini}$ vorzugsweise so gewählt werden, dass sich eine möglichst geringe Überlappung zwischen den Parity Bits, die beim ersten und zweiten Mal gesendet werden, ergibt.
Im Folgenden werden aber Lösungsmöglichkeiten auch für diesen Fall angegeben:

Es ist in diesem Fall unmöglich, bereits nach der zweiten Übertragung alle Parity Bit zu übertragen. Nach der dritten Übertragung kann das aber wieder möglich sein. Zweckmäßigerweise verwendet man bei einer Kodierungsrate die nicht allzu weit über 2/3 liegt, für die dritte Übertragung wieder eine Übertragung, die die systematischen Bit priorisiert; dies ist bereits so im Standard vorgesehen. Die Punktierungsmuster für die 1. und 3. Übertragung werden dabei gegeneinander verschoben. Es ist durch geeignete Wahl des Parameters $e_{ini}$ für die 3. Übertragung möglich, zu erreichen, dass die Menge der Parity bit, die in der 1. und 3. Übertragung zusammengenommen übertragen werden, eine ähnliche Verteilung (ein ähnliches Muster) aufweisen, wie eine einzelne Übertragung, bei der aber doppelt so viele Bit übertragen werden. Die zweite Übertragung kann nun so optimiert werden, dass bei ihr genau diejenigen Bit übertragen werden, die weder in der ersten, noch in der dritten Übertragung übertragen werden. Dabei lassen sich die oben genannten Formeln in analoger Weise einsetzen, wobei natürlich berücksichtigt wird, dass in der ersten und dritten Übertragung zusammengenommen doppelt so viele Parity Bit übertragen werden, wie in der ersten Übertragung alleine. Die Formeln für die optimale Wahl der in der zweiten Übertragung zu übertragenen Parity 1 Bit und Parity 2 Bit lässt sich dann folgendermaßen herleiten: Bestimme eine äquivalente Ratenanpasung, die die Parity 1 und Parity 2 Bit auswählt, die in der ersten oder dritten Übertragung übertragen werden. Die Anzahl der übertragenen Bit entspricht dabei der Summe, der Wert von eini soll entsprechend bestimmt werden. Ggf. soll man den Wert von eini für die dritte Übertragung passend so wählen (in Relation zum Wert von eini für die erste Übertragung), dass diese beide Übertragungen so zusammengefasst werden können, das sich ein Gesamtübertragungsmuster ergibt, wie bei einer einzigen Übertragung. Anhand dem für dieses zusammengefassten Musters lässt sich dann wie oben beschrieben der Wert für die Anzahl der zu übertragenden Parity 1 und parity 2 Bit und der Wert von eini für die zweite Übertragung bestimmen.

Alternativ ist auch folgendes Vorgehen zur Bestimmung passender Werte für eini möglich: Wie für den Fall, dass die Kodierrate zwischen ½ und 2/3 liegt gezeigt, werden Formeln für die drei Ratenanpassungsalgorithmen aufgeschrieben, nur dass es in diesem Falle derer drei statt zwei sind. Dann wird festgelegt, dass für jeden wert von m immer bei genau einem Algorithmus ein Bit verwendet wird. Dies führt analog wie oben gezeigt zu entsprechenden Bedingungen für die Werte von e bei den drei Algorithmen und somit auch für die Werte von eini.

Dieses Ausführungsbeispiel sei durch ein Zahlenbeispiel erläutert:

Nehmen wir an, dass eine Übertragung aus je 100 systematischen Bit, parity 1 Bit und parity 3 Bit besteht, insgesamt also aus 300 Bit. Nehmen wir weiter an, dass in einer Übertragung 140 Bit übertragen werden. In der ersten (und genauso in der dritten) Übertragung werden die 100 systematischen Bit und je 20 Parity 1 und Parity 2 Bit übertragen. Zusammen in 1. und 3. Übertragung also je 40 Parity 1 und Parity 2 Bit. somit fehlen je 60 Parity 1 und Parity 2 Bit. Genau diese bit werden nun in der zweiten Übertragung übertragen. Um wieder die Gesamtzahl von 140 Bit zu erhalten, werden in der zweiten Übertragung auch noch 140-60-60=20 systematische Bit übertragen. Dieses Ausführungsbeispiel lässt sich anwenden, wenn in der ersten Übertragung mindestens 1/6 der Parityl (bzw. parity 2) Bit übertragen werden. Dann können auch in der dritten Übertragung 1/6 übertragen werden, bei der zweiten Übertragung können dann mindestens ½+1/6= 2/3 der Parity Bit übertragen werden, zusammen also mindestens 2/3+1/6+1/6=1/1 alle Parity Bit. Dieses Ausführungsbeispiel ist also insbesondere anwendbar für Kodierungsraten zwischen 2/3 und ¾ =0,75.

Dieses Ausführungsbeispiel sei im folgenden in Formeln gefasst: Sei N die Anzahl der Systematischen Bit; das ist gleichzeitig die Anzahl der parity1 und auch der parity2 bit (eine Verallgemeinerung auf den Fall, dass diese Anzahlen unterschiedlich sind, ist leicht möglich, wird der Klarheit halber aber hier unterlassen) Seien Ns1=Ns3, N11=N13 und N21=N23 die Anzahl der bei der Ersten (und Dritten) Übertragung übertragenen systematischen, Parityl und Parity2 Bit. Seien Ns2, N12 und N22 die Anzahl der in der zweiten Übertragung zu übertragenden systematischen, Parityl und Parity2 Bit. Dann gilt:

$$N12 = N - N11 - N13$$

$$N22 = N - N21 - N23$$

$$Ns2 = Ns1 + N11 - N12 + N21 - N22 = Ns1 + N11 + N21 - N + N11 + N13 - N + N21 + N23 = Ns1 + N13 + N23 + 2*(N11 + N21 - N)$$

Die letzte Zeile ist einfach der Ausdruck dafür, dass die verbleibenden Bit mit systematischen Bit aufgefüllt werden, bringt also für die Praxis keine weitere Rechenvereinfachung sondern ist mehr eine alternative Darstellung.

Diese Verallgemeinerung des erfindungsgemäßen Verfahrens erlaubt also die Anwendung bis zu recht hohen Kodierungsraten für die Erstübertragung. Bei noch höheren Raten, also einer Rate größer als ¾ benötigt man zwei Wiederholungsübertragungen, welche Parity Bits bevorzugen, um insgesamt in drei Übertragungen alle Parity Bit übertragen zu können. In diesem Fall werden bereits durch die beiden Wiederholungsübertragungen alle Parity Bit übertragen, so dass es für die Performanz nach Empfang der dritten Übertragung nicht ausschlaggebend ist, welche der Parity Bit zusätzlich bereits in der Erstübertragung gesendet wurden.

Für die Verbesserung der Leistung nach der zweiten Übertragung ist es aber weiterhin erstrebenswert, dass in der zweiten Übertragung (erste Wiederholungsübertragung) solche Parity bit übertragen werden, die in der ersten Übertragung nicht gesendet wurden. Insofern lässt sich die Erfindung in abgewandelter Form auch in diesem Fall anwenden. Insbesondere sollte der Wert von eini wieder so gewählt werden, dass sich möglichst wenig Überlappungen ergeben und es kann wiederum vorteilhaft sein, in einer Übertragung weniger Parity bit zu senden, als möglich wäre, um ein besseres Ineinandergreifen der Muster zu erreichen.

## Patentansprüche

1. Verfahren zur Datenübertragung in Form von Datenpaketen,

   - bei dem Daten durch eine Turbo-Codierung in systematische Bit und Paritätsbit umgesetzt werden,
   - bei dem von einem Sender (1) an einen Empfänger (2) ein erstes Datenpaket gesendet wird, das die systematischen Bit und einen Teil der Paritätsbit enthält,
   - bei dem bei Vorliegen einer entsprechenden Aufforderung des Empfängers (2) mindestens ein Wiederholungsdatenpaket an den Empfänger (2) gesendet wird, das die Paritätsbit enthält, die im ersten Datenpaket nicht enthalten sind, und
   - bei dem die in dem ersten Datenpaket oder in dem Wiederholungsdatenpaket enthaltenen Paritätsbit durch einen Ratenanpassungsalgorithmus aus den aus der Turbocodierung resultierenden Paritätsbit ausgewählt werden,
   - wobei der Ratenanpassungsalgorithmus folgende Verfahrensschritte enthält:

     a) Setzen einer Fehlervariablen e auf einen Initialwert $e_{ini}$,
     b) Setzen eines Bitindex m auf das erste Bit,
     c) Subtraktion eines Erniedrigungswertes $e_{minus}$ von der Fehlervariablen e,
     d) Falls die Fehlervariable e kleiner oder gleich 0 ist durchführen der Schritte e) bis f),
     e) Punktieren des durch den Bitindex m angezeigten Bit,
     f) Addition eines Erhöhungs-Wertes $e_{plus}$ zur Fehlervariablen e,
     g) Erhöhen des Bitindex m,
     h) Wiederholen der Schritte c) bis g), bis der Bitindex m die Anzahl der zu verarbeitenden Bit überschreitet, und

   **dadurch gekennzeichnet, dass**
   - die Parameter des Ratenanpassungsalgorithmus derart gewählt werden, dass die Bedingung $e_{ini2} - e_{minus2} = 1 - e_{ini1} - e_{minus1}$ erfüllt ist, wobei gilt:

     $e_{ini2}$, $e_{minus2}$ = Initialwert bzw. Erniedrigungswert der Fehlervariablen dem obengenannten $e_{ini}$ bzw. $e_{minus}$ entsprechend falls der Ratenanpassungsalgorithmus im Zusammenhang mit dem Wiederholungsdatenpaket verwendet wird und

     $e_{ini1}$, $e_{minus1}$ = Initialwert bzw. Erniedrigungswert der Fehlervariablen dem obengenannten $e_{ini}$ bzw. $e_{minus}$ entsprechend falls der Ratenanpassungsalgorithmus im Zusammenhang mit dem ersten Datenpaket verwendet wird.

2. Verfahren nach Anspruch 1,

   - bei dem das Wiederholungsdatenpaket keine Paritätsbit enthält, die im ersten Datenpaket enthalten sind.

3. Verfahren nach einem der vorhergehenden Ansprüche,

   - bei dem das Wiederholungsdatenpaket neben den Paritätsbit, die im ersten Datenpaket nicht enthalten sind, systematische Bit enthält.

4. Verfahren nach einem der vorhergehenden Ansprüche,

   - bei dem die Kodierungsrate des Turbocoders unter Berücksichtigung der Ratenanpassung zwischen ½ und 2/3 liegt.

**5.** Verfahren nach einem der vorhergehenden Ansprüche,

    - bei dem die Punktierungsrate des Ratenanpassungsalgorithmus zwischen ½ und 1/3 liegt.

**6.** Verfahren nach einem der vorhergehenden Ansprüche,

    - bei dem der Initialwert der Fehlervariablen des Ratenanpassungsalgorithmus derart gewählt wird, dass das Wiederholungsdatenpaket keine Paritätsbits enthält, die im ersten Datenpaket enthalten sind.

**7.** Verfahren nach einem der vorhergehenden Ansprüche,

    - bei dem der Initialwert der Fehlervariablen des Ratenanpassungsalgorithmus derart gewählt wird, dass das Wiederholungsdatenpaket solche Paritätsbits enthält, die im ersten Datenpaket nicht enthalten sind.

**8.** Verfahren nach einem der vorangehenden Ansprüche,

    - bei dem für den Einsatz des Ratenanpassungsalgorithmus zur Auswahl der Paritätsbit im ersten Datenpaket gilt:

$$e_{ini}(r) = \left\{ \left( X_i - \left\lfloor r \cdot e_{plus} / r_{\max} \right\rfloor - 1 \right) \bmod e_{plus} \right\} + 1 \,,$$

    - bei dem für den Einsatz des Ratenanpassungsalgorithmus zur Auswahl der Paritätsbit im Wiederholungsdatenpaket gilt:

$$e_{ini}(r) = \left\{ \left( X_i - \left\lceil (r + 1) \cdot e_{plus} / r_{\max} \right\rceil \right) \bmod e_{plus} \right\} + 1 \,,$$

    wobei gilt:

        $e_{ini}(r)$ = der Initialwert für die Fehlervariable; $X_i$ die Anzahl der zu verarbeitenden Bit
        r= 0, falls der Ratenanpassungsalgorithmus in Zusammenhang mit dem ersten Datenpaket angewendet wird;
        r= 1, falls der Ratenanpassungsalgorithmus in Zusammenhang mit dem Wiederholungsdatenpaket angewendet wird; rmax = 2.

**9.** Sender zum Senden von Daten in Form von Datenpaketen mit einer Prozessoreinrichtung, die zur Verwendung in dem Verfahren nach einem der Ansprüche 1 bis 8 eingerichtet ist.

**10.** Empfänger zum Empfang von Daten in Form von Datenpaketen, wobei die Daten durch eine Turbo-Codierung in systematische Bit und Paritätsbit umgesetzt sind, mit einer Prozessoreinrichtung, die zur Verwendung in dem Verfahren nach einem der Ansprüche 1 bis 8 eingerichtet ist, um die Daten zu dekodieren.

**Claims**

**1.** Method for transmitting data in the form of data packets,

    - in which data are converted into systematic bits and parity bits by means of turbocoding,
    - in which a transmitter (1) transmits a first data packet containing the systematic bits and some of the parity bits to a receiver (2),
    - in which, when there is a corresponding request from the receiver (2), at least one repeat data packet containing the parity bits which are not contained in the first data packet is transmitted to the receiver (2), and
    - in which the parity bits contained in the first data packet or in the repeat data packet are selected from the parity bits resulting from the turbocoding by means of a rate matching algorithm,
    - the rate matching algorithm containing the following method steps:

a) an error variable e is set to an initial value $e_{ini}$,

b) a bit index m is set to the first bit,

c) a decrement value $e_{minus}$ is subtracted from the error variable e,

d) if the error variable e is less than or equal to 0, steps

e) to f) are carried out,

e) the bit indicated by the bit index m is punctured,

f) an increment value $e_{plus}$ is added to the error variable e,

g) the bit index m is incremented,

h) steps c) to g) are repeated until the bit index m exceeds the number of bits to be processed, and

**characterized in that** the parameters of the rate matching algorithm are selected in such a manner that the condition $e_{ini2}$

- $e_{minus2} = 1 - e_{ini1} - e_{minus1}$ is satisfied, where:

$e_{ini2}$, $e_{minus2}$ = initial value and decrement value of the error variable according to the abovementioned $e_{ini}$ and $e_{minus}$ if the rate matching algorithm is used in connection with the repeat data packet, and

$e_{ini1}$, $e_{minus1}$ = initial value and decrement value of the error variable according to the abovementioned $e_{ini}$ and $e_{minus}$ if the rate matching algorithm is used in connection with the first data packet.

**2.** Method according to Claim 1,

- in which the repeat data packet does not contain any parity bits contained in the first data packet.

**3.** Method according to one of the preceding claims,

- in which the repeat data packet contains systematic bits in addition to the parity bits which are not contained in the first data packet.

**4.** Method according to one of the preceding claims,

- in which the coding rate of the turbocoder is between 1/2 and 2/3 taking into account rate matching.

**5.** Method according to one of the preceding claims,

- in which the puncturing rate of the rate matching algorithm is between 1/2 and 1/3.

**6.** Method according to one of the preceding claims,

- in which the initial value of the error variable of the rate matching algorithm is selected in such a manner that the repeat data packet does not contain any parity bits contained in the first data packet.

**7.** Method according to one of the preceding claims,

- in which the initial value of the error variable of the rate matching algorithm is selected in such a manner that the repeat data packet contains those parity bits which are not contained in the first data packet.

**8.** Method according to one of the preceding claims,

- in which the following applies to the use of the rate matching algorithm to select the parity bits in the first data packet:

$$\bar{e}_{ini}(r) = \left\{ \left( X_i - \lfloor r \cdot e_{plus} / r_{max} \rfloor - 1 \right) mod\, e_{plus} \right\} + 1 \, ,$$

- in which the following applies to the use of the rate matching algorithm to select the parity bits in the repeat data packet:

$$e_{ini}(r) = \left\{ \left( X_i - \left\lceil (r+1) \cdot e_{plus} / r_{max} \right\rceil \right) \bmod e_{plus} \right\} + 1 \text{ ,}$$

where:

$e_{ini}(r)$ = the initial value for the error variable;
$X_i$ = the number of bits to be processed;
r = 0 if the rate matching algorithm is used in connection with the first data packet;
r = 1 if the rate matching algorithm is used in connection with the repeat data packet;
rmax = 2.

9. Transmitter for transmitting data in the form of data packets, having a processor device which is set up for use in the method according to one of Claims 1 to 8.

10. Receiver for receiving data in the form of data packets, the data being converted into systematic bits and parity bits by means of turbocoding, having a processor device which is set up for use in the method according to one of Claims 1 to 8 in order to decode the data.

**Revendications**

1. Procédé de transmission de données sous forme de paquets de données,

   - dans lequel on transforme des données par un turbo-codage en bits systématiques et en bits de parité,
   - dans lequel on envoie, par un émetteur ( 1 ) à un récepteur ( 2 ), un premier paquet de données, qui contient les bits systématiques et une partie des bits de parité,
   - dans lequel, en présence d'une invitation correspondante du récepteur ( 2 ), on envoie au moins un paquet de données de répétition au récepteur ( 2 ), qui contient les bits de parité qui ne sont pas contenus dans le premier paquet de données, et
   - dans lequel on sélectionne les bits de parité contenus dans le premier paquet de données ou dans le paquet de données de répétition par un algorithme d'adaptation de débit parmi les bits de parité provenant du turbo-codage,
   - dans lequel l'algorithme d'adaptation de débit comporte les stades suivants :

      a ) mise d'une variable e d'erreur à une valeur eini initiale,
      b ) mise d'un indice m de bit sur le premier bit,
      v ) soustraction d'une valeur eminus d'abaissement de la variable e d'erreur,
      d ) si la variable e d'erreur est égale ou inférieure à 0, on effectue les stades e ) à f ),
      e ) ponctuation du bit indiqué par l'indice m de bit,
      f ) addition d'une valeur eplus d'augmentation à la variable e d'erreur,
      g ) augmentation de l'indice m de bit,
      h ) répétition des stades c ) à g ) jusqu'à ce que l'indice m de bit dépasse le nombre des bits à traiter, et

   **caractérisé**
   - **en ce que** l'on choisit les paramètres de l'algorithme d'adaptation de débit de façon à satisfaire la condition eini2 - eminus2 = 1 - eini1 - eminus1 avec :

      eini2, eminus2 = valeur initiale et valeur d'abaissement de la variable d'erreur correspondant à eini et eminus mentionnés ci-dessus, dans le cas où l'algorithme d'adaptation de débit est utilisé en relation avec le paquet de données de répétition
      et
      eini1, eminus1 = valeur initiale et valeur d'abaissement de la variable d'erreur correspondant à eini ou eminus mentionnés ci-dessus, dans le cas où l'algorithme d'adaptation de débit est utilisé en relation avec le premier paquet de données.

2. Procédé suivant la revendication 1,

- dans lequel le paquet de données de répétition ne contient pas de bits de parité qui sont contenus dans le premier paquet de données.

3. Procédé suivant l'une des revendications précédentes,

- dans lequel le paquet de données de répétition contient, outre les bits de parité qui ne sont pas contenus dans le premier paquet de données, des bits systématiques.

4. Procédé suivant l'une des revendications précédentes,

- dans lequel le taux de codage du turbo codeur, en tenant compte de l'adaptation de débit, est compris entre ½ et 2/3.

5. Procédé suivant l'une des revendications précédentes,

- dans lequel le taux de ponctuation de l'algorithme d'adaptation de débit est compris entre ½ et ⅓.

6. Procédé suivant l'une des revendications précédentes,

- dans lequel on choisit la valeur initiale de la variable d'erreur de l'algorithme d'adaptation de débit de façon à ce que le paquet de données de répétition ne contienne pas les bits de parité qui sont contenus dans le premier paquet de données.

7. Procédé suivant l'une des revendications précédentes,

- dans lequel on choisit la valeur initiale de la variable d'erreur de l'algorithme d'adaptation de débit de façon à ce que le paquet de données de répétition contienne les bits de parité qui ne sont pas contenus dans le premier paquet de données.

8. Procédé suivant l'une des revendications précédentes,

- dans lequel, pour l'utilisation de l'algorithme d'adaptation de débit pour la sélection du bit de parité dans le premier paquet de données, on a :

$$e_{ini}(r) = \left\{\left(X_i - \lfloor r \cdot e_{plus}/r_{max}\rfloor - 1\right)\bmod e_{plus}\right\} + 1,$$

- dans lequel, pour l'utilisation de l'algorithme d'adaptation de débit pour la sélection du bit de parité dans le paquet de données de répétition, on a :

$$e_{ini}(r) = \left\{\left(X_i - \lceil (r+1) \cdot e_{plus}/r_{max}\rceil\right)\bmod e_{plus}\right\} + 1,$$

avec :

eini( r ) = valeur initiale de la variable d'erreur ;
xi = nombre des bits à traiter ;
r = 0, dans le cas où l'algorithme d'adaptation de débit est utilisé en liaison avec le premier paquet de données ;
r = 1, dans le cas où l'algorithme d'adaptation de débit est utilisé en relation avec le paquet de données de répétition ;
rmax = 2.

9. Emetteur pour envoyer des données sous forme de paquets de données ayant un dispositif de processeur, qui est

EP 1 708 403 B1

équipé pour être utilisé dans le procédé suivant l'une des revendications 1 à 8.

10. Récepteur de réception de données sous la forme de paquets de données, les données étant transformées par un turbo-codage en bits systématiques et en bits de parité, comprenant un dispositif de processeur qui est équipé en vue d'être utilisé dans le procédé suivant l'une des revendications 1 à 8 pour décoder les données.

## FIG 1

HARQ-Headererzeugung / Redundanzsteuerung ~ 3

Daten | Header

Hinzufügen von CRC-Bits ~ 4

Codeblock-Segmentierung ~ 5

Kanalcodierung ~ 6

19

Bitseparation ~ 20

A | B | C

Ratenanpassung ~ 21 | Ratenanpassung ~ 22 | Ratenanpassung ~ 23

Bitkollektion ~ 24

Hinzufügen von DTX-Bits ~ 9

Interleaving ~ 10

Senderahmen-Segmentierung ~ 11

Header-Verknüpfung ~ 12

Hinzufügen von CRC-Bits ~ 13

Kanalcodierung ~ 14

Ratenanpassung ~ 15

Interleaving ~ 16

Senderahmen-Segmentierung ~ 17

18

Multiplexen auf Sendekanal

. . .

# FIG 2